Europäisches Patentamt

European Patent Office

Office européen des brevets

(11) Veröffentlichungsnummer: **0 403 913**
A1

## (12) EUROPÄISCHE PATENTANMELDUNG

(21) Anmeldenummer: 90111002.3

(22) Anmeldetag: 11.06.90

(51) Int. Cl.5: **C09D 7/02, C09D 167/08**

(30) Priorität: 20.06.89 DE 3920130

(43) Veröffentlichungstag der Anmeldung:
27.12.90 Patentblatt 90/52

(84) Benannte Vertragsstaaten:
GR

(71) Anmelder: Henkel Kommanditgesellschaft auf Aktien
Postfach 1100 Henkelstrasse 67
D-4000 Düsseldorf 1(DE)

(72) Erfinder: Bunte, Reinhard, Dr.
Bismarckstrasse 30
D-4047 Dormagen 11(DE)
Erfinder: Gress, Wolfgang
Westfalenweg 247
D-5600 Wuppertal 1(DE)
Erfinder: Nagorny, Ulrich
Heinrich-Lersch Strasse 37
D-4010 Hilden(DE)
Erfinder: Gorzinski, Manfred
Bogenstrasse 6
D-4000 Düsseldorf 1(DE)

(54) **Verwendung von Partialestern von Oligoglycerinen mit Fettsäuren als Pigmentdispergatoren für wässrige Lackdispersionen.**

(57) Die Verwendung von gegebenenfalls ethoxylierten und/oder propoxylierten Partialestern von durch Kondensation von 2 bis 20 Glycerinmolekülen erhältlichen Oligoglycerinen mit·gegebenenfalls hydroxysubstituierten $C_2$- bis $C_{18}$-Fettsäuren als Pigmentdispergatoren für wässrige Lackdispersionen ergibt hohe Glanzgrade und eine verbesserte chemische und mechanische Beständigkeit der damit erhaltenen Lackfilme.

EP 0 403 913 A1

## Verwendung von Partialestern von Oligoglycerinen mit Fettsäuren als Pigmentdispergatoren für wässrige Lackdispersionen.

Die Erfindung betrifft die Verwendung von gegebenenfalls ethoxylierten und/oder propoxylierten Partialestern von durch Kondensation von 2 bis 20 Glycerinmolekülen erhältlichen Oligoglycerinen mit gegebenenfalls hydroxysubstituierten $C_2$-bis $C_{18}$-Fettsäuren als Pigmentdispergatoren für wässrige Lackdispersionen.

Partialester von durch Kondensation von 2 bis 20 Glycerinmolekülen erhältlichen Oligoglycerinen mit Fettsäuren sind bekannt, vgl. Fette, Seifen, Anstrichmittel, Jahrgang 88, Seite 101 bis 106 (1986); DE-C 25 11 807. Diese Partialester werden häufig als innere Gleitmittel und/oder antistatische Zusätze für Kunststoffe eingesetzt.

Als Pigmentdispergatoren für wässrige Lackdispersionen werden häufig anionische Dispergatoren eingesetzt; weiterhin auch nicht-ionische Dispergatoren vom Typ der Anlagerungsprodukte von Ethylenoxid und/oder Propylenoxid an Verbindungen mit aktiven H-Atomen, vgl. H. Kittel (Hrsg.), Lehrbuch der Lacke und Beschichtungen, Bd. III, S. 250 bis 258, Verlag W.A. Colomb, Berlin (1976), oder niedermolekulare Polyacrylsäuresalze, vgl. DE-A 3 318 595.

Der Einsatz der vorbekannten Dispergatoren in wässrigen Lackdispersionen ist jedoch mit verschiedenen Nachteilen behaftet; insbesondere kommt es zu einer vermehrten und unerwünschten Schaumbildung in den wässrigen Lackdispersionen.

Die Erfindung beruht auf der Erkenntnis, daß die eingangs genannten, gegebenenfalls ethoxylierten und/oder propoxylierten Partialester von durch Kondensation von 2 bis 20 Glycerinmolekülen erhältlichen Oligoglycerinen mit gegebenenfalls hydroxysubstituierten $C_2$- bis $C_{18}$-Fettsäuren keinen oder einen nur geringen Einfluß auf das Schaumverhalten der wässrigen Lackdispersionen aufweisen. Darüberhinaus verbessern die Partialester die Lagerstabilität der wässrigen Lackzubereitungen und beeinflussen das Viskositätsverhalten derselben nur wenig. Schließlich weisen die Partialester eine ausgezeichnete Netzwirkung auf, welche sich durch hohe Glanzgrade der getrockneten Lackfilme zu erkennen gibt. Schließlich ist im Vergleich zu niedermolekularen Polyacrylsäuresalzen als Pigmentdispergatoren eine Verbesserung der Methylethylketon-Beständigkeit sowie der mechanischen Eigenschaften, insbesondere bei wässrigen Alkydharz-Zubereitungen, feststellbar. Wässrige Lackzubereitungen, insbesondere solche auf Basis von Alkydharzen, zeigen weiterhin im Schwitzwasser- und Salzsprühtest gegenüber entsprechenden Lacken aus dem Stand der Technik beim Test von den Lackdispersionen beschichteten Metallblechen gleichwertige Ergebnisse.

Die erfindungsgemäß einzusetzenden Partialester werden aus durch Kondensation von 2 bis 20 Glycerinmolekülen erhältlichen Oligoglycerinen als Alkoholkomponente hergestellt, wobei Oligoglycerine, die formal aus 3 bis 10, insbesondere aus 4 bis 6 Glycerinmolekülen aufgebaut sind, zur Herstellung der Partialester bevorzugt sind. Es können auch technische Mischungen der Oligoglycerine mit den angegebenen Kettenlängen eingesetzt werden. Für die Herstellung der Partialester eignen sich auch auf anderen Wegen erhältliche Oligoglycerine, vgl. die eingangs erwähnte Literatur gemäß Fette, Seifen, Anstrichmittel (1986).

Die vorstehend genannten Oligoglycerine werden zur Herstellung der erfindungsgemäß einzusetzenden Partialester mit gegebenenfalls hydroxysubstituierten $C_2$- bis $C_{18}$-Fettsäuren partiell verestert, wobei es bevorzugt ist, daß die Partialester mindestens eine, insbesondere mindestens zwei freie Hydroxylgruppen im Oligoglycerinteil aufweisen. Bei den hierfür geeigneten Fettsäuren handelt es sich um geradkettige oder verzweigte, insbesondere geradkettige, gesättigte oder ungesättigte Fettsäuren mit 2 bis 18 Kohlenstoffatomen. Typische Beispiele für derartige Fettsäuren sind Essigsäure, Propionsäure, Valeriansäure, Capronsäure, Caprylsäure, Caprinsäure, Laurinsäure, Myristinsäure, Palmitinsäure, Isopalmitinsäure, Stearinsäure, Isostearinsäure, Palmitoleinsäure, Ölsäure, Ricinolsäure, Linolsäure, Linolensäure und 12-Hydroxystearinsäure. Ferner kommen Dihydroxyfettsäuren, wie Dihydroxystearinsäure, hydroxy-alkoxy-substituierte und hydroxy-hydroxyalkoxy-substituierte Fettsäuren in Betracht. Derartige Verbindungen können nach bekannten Verfahren aus epoxidierten Fetten und Ölen durch Ringöffnung mit Wasser oder ein- und mehrwertigen Alkoholen wie z.B. Methanol, Ethanol, Ethylenglykol, Glycerin oder Pentaerythrit und anschließende Verseifung der Glyceride erhalten werden. Bevorzugte Fettsäurekomponenten sind gegebenenfalls hydroxysubstituierte, geradkettige $C_{12}$- bis $C_{18}$-Fettsäuren aus der obigen Aufzählung. Wie in der Fettchemie üblich, können die Fettsäuren zur Herstellung der genannten Partialester in Form ihrer technischen Gemische eingesetzt werden.

Die aus den vorgenannten Oligoglycerinen und Fettsäuren erhältlichen Partialester können nach ihrer Herstellung durch Anlagerung von Ethylenoxid und/oder Propylenoxid (in random- oder block-Verteilung der Alkylenoxideinheiten) modifiziert werden. Typischerweise werden 1 bis 30 mol Ethylenoxid pro mol Partialester angelagert. Bei der Anlagerung von Propylenoxid ist auf die Wasserlöslichkeit der so erhaltenen modifizierten Partialester, die mit steigendem Gehalt an Propylenoxidgruppen abnimmt, zu achten. Bei Partialestern höherer Oligoglycerine, z. B. aus 10 oder mehr kondensierten Glycerinmolekülen, können bis zu 30 Propylenoxideinheiten angelagert werden; bei Partialestern aus kürzerkettigen Oligoglycerinen, z. B. aus 3 bis 10 kondensierten Glycerinmolekülen, werden im allgemeinen nicht mehr als 1 bis 3 Propylenoxidgruppen angelagert.

Die erfindungsgemäß einzusetzenden Partialester umfassen auch Produkte, die dadurch erhältlich sind, daß man die als Ausgangsmaterial gewählten Oligoglycerine zunächst mit Ethylenoxid und/oder Propylenoxid zur Reaktion bringt und danach die Veresterung mit den vorgesehenen Fettsäuren durchführt. Die weiter oben stehenden Angaben über Alkylenoxid-modifizierte Partialester gelten hier sinngemäß.

Die erfindungsgemäß zu verwendenden, gegebenenfalls ethoxylierten und/oder propoxylierten Partialester eignen sich als Pigmentdispergatoren für pigmenthaltige, übliche wässrige Lackdispersionen, z. B. auf Basis von wässrigen Dispersionen von dispergierbaren Polymeren wie Acrylaten, Methacrylaten, Polyurethanen, Polyvinylacetat, natürlichen und synthetischen Kautschuken und dergleichen. Sie sind besonders geeignet für Lackdispersionen auf der Basis wässriger Alkydharzdispersionen, die in Ullmann's Encyclopedia of Industrial Chemistry, Vol. A1, Seite 409 bis 423 näher erläutert sind. Besonders bevorzugte wässrige Alkydharzdispersionen enthalten hydroxylgruppenhaltige Alkydharze und sind in der DE-A 3 318 595, auf deren gesamten Inhalt hier Bezug genommen wird, beschrieben.

Gemäß einer weiteren vorteilhaften Ausführungsform der Erfindung setzt man die gegebenenfalls ethoxylierten und/oder propoxylierten Partialester der eingangs genannten Art in einer Menge von 0,2 bis 100 Gew.-%, insbesondere von 0,2 bis 10 Gew.-%, bezogen auf in den wässrigen Lackzubereitungen vorhandenen Pigmente, ein.

Die Erfindung betrifft weiterhin wässrige Lackdispersionen, insbesondere auf Basis von Alkydharzen, mit einem Gehalt an gegebenenfalls ethoxylierten und/oder propoxylierten Partialestern der oben erläuterten Art als Pigmentdispergatoren.

Die Erfindung wird im folgenden anhand von bevorzugten Ausführungsbeispielen näher erläutert.

Beispiel 1.

Herstellung eines weißen Prüflackes.

In einer Rührapparatur wurden die folgenden Komponenten vorgelegt:
113,0 Gew.-Teile demineralisiertes Wasser
3,5 Gew.-Teile Pentaglycerin-monolaurat
210,0 Gew.-Teile Titandioxid
1,0 Gew.-Teile Entschäumer (10%-ige wässrige Lösung eines handelsüblichen ethoxylierten Polysiloxans).
Unter intensivem Rühren wurden die folgenden Komponenten hinzugegeben:
295,0 Gew.-Teile wässrige Alkydharz-Zubereitung nach DE-A 3 318 595, Beispiel x;
4,0 Gew.-Teile Dimethylethanolamin (Neutralisationsmittel für das Alkydharz)
319,9 Gew.-Teile demineralisiertes Wasser
83,6 Gew.-Teile Hexamethoxymethylmelamin (Härtungshilfsmittel)

Beispiel 2.

Das Beispiel 1 wurde wiederholt, wobei anstelle des dort eingesetzten Pentaglycerin-monolaurats die gleiche Menge Pentaglycerindioleat als Pigmentdispergator verwendet wurde.

Beispiel 3.

Herstellung eines schwarzen Prüflacks.

In der in Beispiel 1 beschriebenen Weise wurden die folgenden Komponenten vermischt:

3

50,0 Gew.-Teile demineralisiertes Wasser

1,8 Gew.-Teile Dimethylethanolamin

10,7 Gew.-Teile Hexamethoxymethylmelamin

40,0 Gew.-Teile Ruß

4,5 Gew.-Teile hochdisperses Siliziumdioxid

45,0 Gew.-Teile Bariumsulfat

3,5 Gew.-Teile Pentaglycerindioleat.

Hierzu wurden die folgenden Komponenten gegeben:

321,1 Gew.-Teile wässrige Alkydharz-Zubereitung nach DE-A 3 318 595, Beispiel 3

4,0 Gew.-Teile Dimethylethanolamin

407,0 Gew.-Teile demineralisiertes Wasser

106,4 Gew.-Teile Hexamethoxymethylmelamin.

2,0 Gew.-Teile Entschäumer (10 %-ige wäßrige Lösung eines handelsüblichen ethoxylierten Polysiloxans)

Beispiel 4.

Das Beispiel 3 wurde wiederholt, wobei anstelle des dort verwendeten Pentaglycerin-monolaurats Pentaglycerin-dioleat als Pigmentdispergator eingesetzt wurde.

Vergleichsbeispiele.

Es wurden wässrige Lackdispersionen gemäß den Beispielen 1 bis 4 hergestellt, wobei anstelle des dort verwendeten Pentaglycerin-monooleats bzw. Pentaglycerin-dioleats jeweils gleiche Mengen, bezogen auf den Wikstoffgehalt, einer handelsüblichen nicht-ionogenen Dispergatorzubereitung, (Anlagerungsprodukt von ca. 10 Mol Ethylenoxid an Nonylphenol; Disponil[R] 286, Fa. Henkel), eines anionischen Dispergators (Additol[R] XL 250; Fa. Hoechst) und eines Polyacrylsäuresalzes gemäß DE-A 3 318 595, Beispiel 3 verwendet wurden.

Die vorstehend erhaltenen Lacke wurden auf Stahlbleche gespritzt und 15 min bei 160° C eingebrannt. Die Trockenfilmdicken betrugen 25 bis 40 Mikrometer. Die erhaltenen Prüfergebnisse der Lackbeschichtungen sind in Tabelle 1 und 2 zusammengefaßt. In die Tabellen wurden auch die Prüfergebnisse mit den Rezepturen gemäß den Vergleichsversuchen aufgenommen.

4

Tabelle 1

| Weißlack | | | | | |
|---|---|---|---|---|---|
| Dispergator | nichtionogen 1) | anionisch 2) | Polyacrylsäuresalz 3) | Beispiel 1 | Beispiel 2 |
| Werte | | | | | |
| Viskosität, mPa.s | 975 | 520 | 340 | 530 | 480 |
| Glanzgrad 60° ) | 52 % | 80 % | 89 % | 77 % | 79 % |
| Pendelhärte, sec. | 133 | 128 | 131 | 131 | 120 |
| Gitterschnitt | 2 | 2 | 4 | 2 | 2 |
| Impact Test reserve inch pound | = 40 | = 40 | = 40 | > 40 | > 40 < 70 |
| Schwitzwassertest | 240 h m1/g1 | 240 h m0/g0 | 240 h m0/g0 | 240 h m0/g0 | 240 h m0/g0 |
| Salzsprühtest 4) | 96 h | 96 h | 96 h | 96 h | 96 h |
| MEK-Test Hübe 5) | 140 | 140 | 140 | 160 | > 170 |
| Aussehen nach 30 Tagen Lagerung bei 23° C | 1-2 mm Serumbildung an der Oberfläche | ca. 50 % Serumbildung leicht homogenisierbar | ca. 5 mm Serumbildung | 1-2 mm Serumbildung an der Oberfläche | 1-2 mm Serumbildung an der Oberfläche |

1) Disponil^R 286
2) Additol XL 250
3) DE-A 3 318 595, Beispiel 3
4) analog DIN SK 50017, 53209
5) MEK = Methylethylketon

Tabelle 2

| Schwarzlack | | | |
|---|---|---|---|
| Dispergator | Polyacrylsäuresalz 1) | Beispiel 3 | Beispiel 4 |
| Werte | | | |
| Viskosität, mPa.s | 850 | 960 | 960 |
| Glanzgrad 60° ) | 82 % | 83 % | 82 % |
| Pendelhärte, sec. | 145 | 145 | 152 |
| Gitterschnitt | 2 - 3 | 2 | 2 |
| Impact Test reserve inch pound | < 70 | = 70 | = 70 |
| Schwitzwassertest | 240 h m0/g0 | 240 h m0/g0 | 240 h m0/g0 |
| Aussehen nach 30 Tagen Lagerung bei 23° C | 2-3 mm Serumbildung | 2-3 mm Serumbildung | 2-3 mm Serumbildung |

1) DE-A 3 318 595, Beispiel 3

## Ansprüche

1. Verwendung von gegebenenfalls ethoxylierten und/oder propoxylierten Partialestern von durch Kondensation von 2 bis 20 Glycerinmolekülen erhältlichen Oligoglycerinen mit gegebenenfalls hydroxysub-

stituierten C$_2$- bis C$_{18}$-Fettsäuren als Pigmentdispergatoren für wässrige Lackdispersionen.

2. Verwendung nach Anspruch 1, dadurch gekennzeichnet, daß die Partialester mindestens eine, insbesondere mindestens zwei freie Hydroxylgruppen im Oligoglycerinteil aufweisen.

3. Verwendung nach Anspruch 1 oder 2, dadurch gekennzeichnet, daß die Partialester aus durch Kondensation von 3 bis 10, insbesondere 4 bis 6 Glycerinmolekülen erhältlichen Oligoglycerinen und gegebenenfalls hydroxysubstituierten, geradkettigen C$_{12}$- bis C$_{18}$-Fettsäuren gebildet sind.

4. Verwendung nach mindestens einem der Ansprüche 1 bis 3, dadurch gekennzeichnet, daß die Lackdispersionen wässrige Alkydharzdispersionen, insbesondere wässrige Dispersionen hydroxylgruppenhaltiger Alkydharze, sind.

5. Verwendung nach mindestens einem der Ansprüche 1 bis 4, dadurch gekennzeichnet, daß man die gegebenenfalls ethoxylierten und/oder propoxylierten Partialester in einer Menge von 0,2 bis 100 Gew.-%, insbesondere 0,2 bis 10 Gew.-%, bezogen auf in den wässrigen Lackzubereitungen vorhandene Pigmente, einsetzt.

6. Wäßrige Lackdispersionen, insbesondere auf Basis von Alkydharzen, mit einem Gehalt an gegebenenfalls ethoxylierten und/oder propoxylierten Partialestern von durch Kondensation von 2 bis 20 Glycerinmolekülen erhältlichen Oligoglycerinen mit gegebenenfalls hydroxysubstituierten C$_2$- bis C$_{18}$-Fettsäuren gemäß mindestens einem der Ansprüche 1 bis 5, als Pigmentdispergatoren.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-1 237 716 (BYK-GULDEN LOMBERG CHEM. FABRIK) * Ansprüche * --- | | C 09 D 7/02 C 09 D 167/08 |
| A | DATABASE WPIL, Nr. 89-183961, Derwent Publications Ltd, London, GB; & JP-A-1 123 737 (NIPPON CARBIDE KOGYO) 16-05-1989 * Ganzes Dokument * --- | | |
| A,D | DE-A-2 511 807 (TJURIN, BORIS KONSTANTINOWITSCH) ----- | | |

**RECHERCHIERTE SACHGEBIETE (Int. Cl.5)**

C 09 D

Der vorliegende Recherchenbericht wurde für alle Patentansprüche erstellt

| Recherchenort | Abschlußdatum der Recherche | Prüfer |
|---|---|---|
| DEN HAAG | 11-09-1990 | GIRARD Y.A. |